# EUROPEAN PATENT SPECIFICATION

(11) **EP 2 665 648 B1**
(45) Date of publication and mention of the grant of the patent: **14.09.2016**
(21) Application number: 13745785.9
(22) Date of filing: 21.06.2013
(51) Int. Cl.: B64D 11/06, B60N 2/00, H01M 8/00

(54) **REMOVABLE FUEL CELL COMPONENTS FOR PASSENGER SEAT**
ABNEHMBARE BRENNSTOFFZELLENKOMPONENTEN FÜR FAHRGASTSITZ
COMPOSANTS DE PILE À COMBUSTIBLE AMOVIBLES POUR SIÈGE DE PASSAGER

(30) Priority: 25.06.2012 US 201261663684 P; 13.03.2013 WO PCT/IB2013/051979
(43) Date of publication of application: 27.11.2013
(73) Proprietor: Zodiac Seats France, 36100 Issoudun (FR)
(72) Inventor: VANDROUX, Oliver, 38100 Grenoble (FR); VELICKOVIC, Predrag, 93110 Rosny Sous Bois (FR); OBADIA, Jean-Marc, 38300 Maubec (FR); RUSSELL, Dean W., Atlanta, Georgia 30339 (US)
(74) Representative: Marconnet, Sébastien
(86) International application number: PCT/IB2013/055119
(87) International publication number: WO 2013/144934

(56) References cited:
- WO-A1-00/35032
- DE-A1-102006 020 146
- US-A1- 2002 149 237
- US-A1- 2008 038 597

## Description

### FIELD OF THE INVENTION

Embodiments of the present invention relate generally to removable fuel cell systems and components that can positioned on a passenger seat and that have the fuel bottle portion easily removed for re-fueling the fuel bottles. Embodiments are particularly useful in relation to aircraft seats, and particularly business and first class aircraft seats, which may be provided with one or more of the following features: powered movement/actuation; heating/cooling system; lighting system; in-flight entertainment (IFE) system; power supply for laptop, phone charging, and other personal powered systems; massage option; water mist option; IFE screen cleaning; or any combination thereof. The power for these features may be provided by power generated by a fuel cell and/or supplied by the by-products created by the fuel cell. It should be understood, however, that the systems described herein may be used on other passenger transport vehicle seats or other components as well.

### BACKGROUND

A number of components on-board an aircraft require electrical power for their activation. Many of these components are separate from the electrical components that are actually required to run the aircraft (i.e., the navigation system, fuel gauges, flight controls, and hydraulic systems). For example, aircraft also have catering equipment, heating/cooling systems, lavatories, power seats, water heaters, and other components that require power as well. Specific components on or near passenger seats that may require external power include but are not limited to area or spot lights on seats (e.g., cabin lights and/or reading lights for passenger seats), charging stations for passenger electronics, electrical sockets, power seats (e.g., especially for business or first class seats), passenger entertainment units, emergency lighting, and combinations thereof. These components are important for passenger comfort and satisfaction, and many components are absolute necessities.

However, one concern with these components is their energy consumption. It may be desirable to power these systems separately, rather than relying on the aircraft engines' drive generators or additional power sources, such as a kerosene-burning auxiliary power unit (APU) (or by a ground power unit if the aircraft is not yet in flight). Additionally, use of aircraft power produces noise and CO₂ emissions, both of which are desirably reduced. Accordingly, it is desirable to identify ways to improve fuel efficiency and power management by providing innovative ways to power these components. There are new ways being developed to generate power to run on-board components, as well as to harness beneficial by-products of that power generation for other uses on-board passenger transport vehicles, such as aircraft.

The relatively new technology of fuel cells provides a promising cleaner and quieter way to supplement energy sources already aboard aircrafts. A fuel cell has several outputs in addition to electrical power, and these other outputs often are not utilized, but can be used to avoid loss of other usable energy sources (such as thermal, electric and/or pneumatic power) generated by the fuel cell system. Fuel cell systems combine a fuel source of compressed hydrogen with oxygen in the air to produce electrical and thermal power as a main product. Water, heat, and Oxygen Depleted Air (ODA) are produced as by-products, which are far less harmful than CO₂ emissions from current aircraft power generation processes. A prior art seat comprising a replaceable fuel cell cartridge as power source located under the seating surface, e.g. in the seat pan, foot rest or back rest of the seat, is known from document DE 10 2006 020 146 A1. However, because the proposed use of fuel cell systems on-board aircraft and other vehicles is relatively new, there are not appropriate fuel bottle exchange systems in place for the fuel cell systems.

Additionally, the emerging concept of providing an individual fuel cell in each individual seat adds a layer of complexity to the re-fueling step. Contrary to a single, central fuel cell that it housed at one location on an aircraft and that can be serviced with a single fuel bottle or source, when an individual fuel cell is positioned on each seat, each individual fuel bottle or fuel source needs to be replaced. This means that additional ground time is required for the vehicle, adding to the aircraft turn-around time and expenses required. However, there are definite advantages to providing individual seats with fuel cells, as outlined in co-pending application PCT/IB2013/051979, filed March 13, 2013, titled "Vehicle Seat Powered by Fuel Cell."

Document US2008/0038597 describes a semi-autonomous central supply system for passenger seats comprising a fuel cell system.

### BRIEF SUMMARY

Accordingly, it is desirable to provide systems for easily removing and replacing the fuel cell source, such that even passengers can conduct the replacement, rather than crew members. Embodiments of the invention described herein thus provide passenger seats, such as aircraft seats, that are individually fitted with removable fuel cells. The seat fitted with a fuel cell can then use fuel cell power, as well as the by-products generated by the fuel cell to supply energy and elements to optional seat functions. The easily replaceable fuel cell power source allows for fast and easy replacement, without any required tools or mechanical knowledge.

The invention provides a method as defined in independent claim 1.

### BRIEF DESCRIPTION OF THE DRAWINGS

FIG. 1 shows a rear perspective view of a passenger seat having a fuel cell located on its armrest and/or the back of the seat.
FIG. 2 shows a fuel cell receiver with a fuel cell bottle for easy replacement.
FIG. 3 shows one embodiment of a quick fixation between the fuels cell bottle and the fuel cell receiver.
FIG. 4 shows an embodiment in which the fuel cell is integrated into the armrest.
FIG. 5 shows an embodiment in which the fuel cell is integrated into the in-flight entertainment unit.

### DETAILED DESCRIPTION

Embodiments of the present invention provide improvements to passenger seats, by fitting the seats with an easily replaceable fuel cell source. The features will be described herein with respect to aircraft seats, and particularly aircraft seats that desirably perform a number of varying functions and provide varying features, but it should be understood that the described features may also be used in connection with any other seats that may use electrical power, heat, water and/or oxygen depleted air, such as vehicle seats, massage chairs, heated seats, beauty parlor seats, and so forth.

Although there are benefits to providing passenger seats with individual fuel cells to power various electronics (such as in-flight entertainment (IFE) units, seat controls, lights, cooling misters, seat heaters, chargers, and any other systems that may be associated with the seat), these benefits also carry costs. Of primary importance is the additional labor and time needed to replace each individual fuel source for each individual seat. For an aircraft that has 400 seats, that means that a crew member is going to have to remove and replace 400 fuel cell bottles, one per seat during aircraft turn-around. This adds to increased turn-over time to prepare the aircraft for the next flight, as well as potentially increased labor costs.

Accordingly, the present inventors have determined that individual seats fitted with fuel cells also benefit from having the fuel cell components be easily removable such that the fuel cell source/bottle can be removed and replaced quickly and without specific knowledge or tools required. The connection between the fuel cell bottle and the fuel cell receiver is configured such that even a passenger can insert and lock the fuel bottle into place.

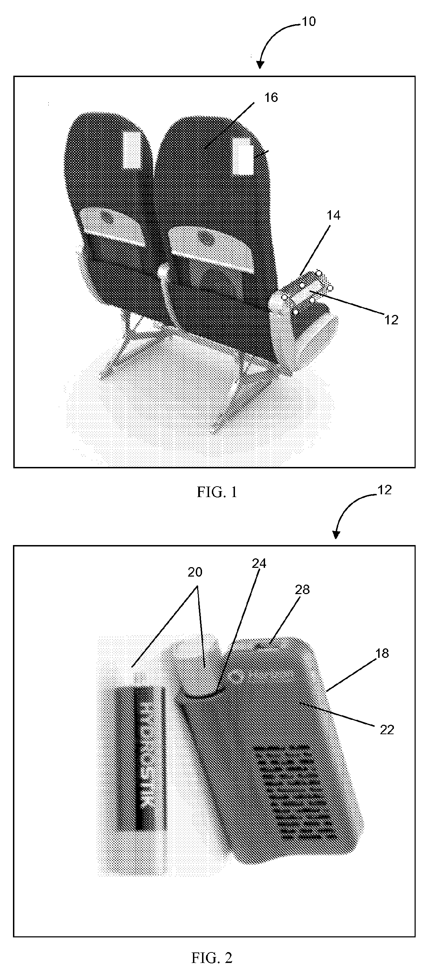

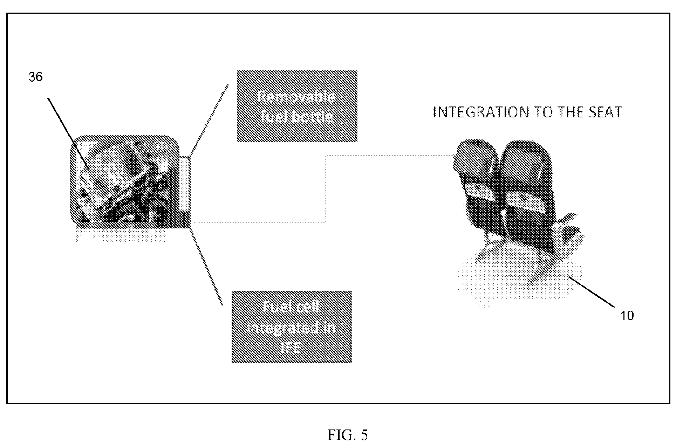

Figure 1 illustrates a passenger seat 10 having a fuel cell system 12 installed thereon. As shown, the system 12 may be located on the armrest 14 or, as shown in Fig. 5, on or near the seat's in-flight entertainment unit which may be positioned in the immediately forwardly located seat back 16. Figure 2 shows primary parts of the fuel cell system 12 components that are installed or otherwise associated with the seat 10-a fuel receiver 18 and a fuel bottle 20. The fuel receiver 18 has a housing 22 with a receiving port 24 and a miniature fuel cell (not shown) contained within the housing 22. There is also an output port 28 where electrical power output may be delivered via a USB cable or any other output delivery system. The receiving port 24 is sized and shaped to receive a fuel bottle 20. The housing 22 is generally firmly secured in place or otherwise attached to the seat, such that it does not move when the fuel bottle is removed and replaced. It may be screwed in place, adhered in place, directly built into the seat, attached in any other appropriate manner.

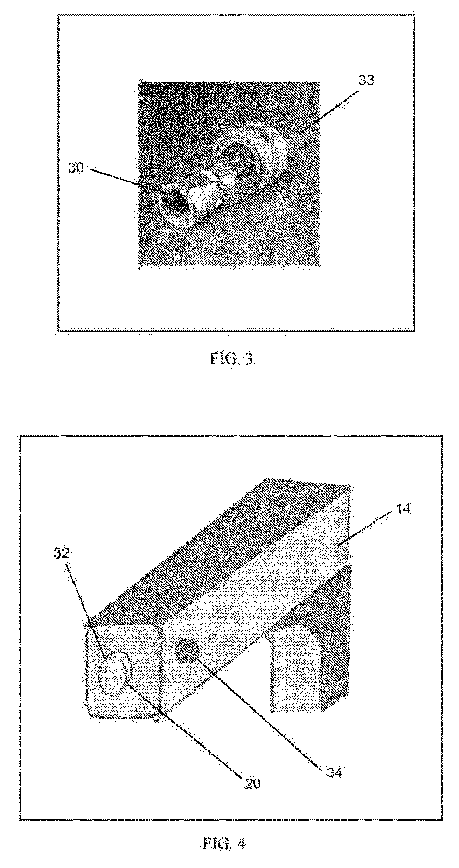

The fuel bottle 20 provides the hydrogen source required for the fuel cell operation. The fuel bottle 20 has a connection end 30 that is configured to be received in the receiving port 24 of the fuel receiver 18. Figure 3 illustrates a quick fixation feature which includes a receiving end 33 located at the base of the receiving port 24, into which the connection end 30 of the fuel bottle 20 is received. The parts may be snap fit together, screwed together, magnetically attached, or any other appropriate connecting/securing method may be used. A docking connection, much like a quick connect or docking systems used for smart phones into chargers or music players may also be used. The receiving end 33 is shown as a female portion and the connection end 30 is shown as a male portion in Figure 3, but it should be understood that the configurations may be reversed.

One exemplary system that may be used is manufactured and marketed by Horizon Fuel Cell Technologies Pte. Ltd., based in Singapore, sold as the portable MiniPak handheld USB charger, but it should be understood that any other small fuel cell system (capable of fitting into an area on a passenger seat) is possible and available for use with the concepts provided herein. The Horizon system provides a separate charging system that can refill the fuel cell bottle with hydrogen using deionized or distilled water.

Figure 4 shows an exemplary embodiment with the fuel cell bottle 20 being inserted into a port 32 in the arm rest 14. (The fuel cell receiver 18 may also be located in the arm rest such that the receiving port 24 is the port 32 into which the bottle 20 is inserted, or it may be located elsewhere, such that the port 32 into which the bottle 20 is inserted is fluidly connected to the remainder of the receiver 18.) In this embodiment, the arm rest may have a release button 34 that disconnects the bottle 20 from the port 32 and allows for easy removal and replacement of the bottle 20.

Figure 5 shows an alternate location for the fuel cell system 12. As shown, the system 12 may be integrated into the in-flight entertainment (IFE) 36 unit fitted into the back of each seat 10 such that the fuel cell system 12 may be used to power the IFE, as well as any other of the described seat functions. In this embodiment, the port 32 into which the bottle 20 is inserted is positioned generally near the IFE for easy-access.

In use, one commercially feasible way to use the seat fuel cell systems 12 described herein is to distribute fuel cell bottles 20 at the entrance of the flight to each passenger. For example, the flight attendant may pass out a fuel cell bottle 20 to each passenger upon boarding, or the bottles may be available at a self-service distributor. Once settled, the passenger may insert the bottle 20 into the port 32 or 24 located on the seat 10 in order to activate power. This can allow the passenger to have access to one or more of overhead lights, a USB port for charging electronic devices, WiFi access, IFE, and perhaps even a chair massage, cooling mist, heating feature, seat controls, flight attendant call button, or any other powered seat functions. By allowing the passengers to individually insert their fuel cell bottles 20, the airline can save turn-around time by preventing a crew member from having to individually insert a bottle 20 at each seat location. This may also allow the airline to make extra revenue, for example, by linking desired seat functions to the purchase of a fuel cell bottle 20. If a passenger does not desire the extra seat functions, then he/she may decide to not purchase the fuel cell bottle 20. One advantage of this method is that it prevents the need for aircraft or maintenance crew from having to remove and replace the bottles on each seat. The quick release button 34 may be pressed to easily cause a used bottle 20 to eject from port, and the new bottle 20 can then be inserted into the port. Each seat may have a used fuel cell bottle disposal bag for containing the used bottle (which may be collected and recharged for re-use).

In an alternate embodiment, the aircraft or maintenance crew may be tasked with removing and inserting the individual fuel cell bottles 20 during aircraft turnaround time. By providing a quick release button 34 and easy connections, the time for this process may be minimized.

The embodiments described herein provide aircraft seats that are individually fitted with fuel cells, enabling the seats to be fully autonomous and freely placed in the cabin independently of any connection to any other seat or to any aircraft power features. The seat fitted with a fuel cell can then use fuel cell power, as well as the by-products generated by the fuel cell to supply energy and elements to optional seat functions. For example, the fuel cell system 12 may provide heat, water and oxygen-depleted air for various seat functions. By providing easy access for the fuel cell bottle 20 at an accessible location on the seat 10, such as on the armrest 14 or the seat back 16, passengers may be the ones to remove and replace the fuel cell bottles 20. The fuel cell bottle may simply extend from the seat area, such that a used bottle may be grasped and pulled from the port, or a quick release button may be provided which causes a used fuel cell bottle to be ejected from the port. Other release mechanisms are possible and considered within the scope of this invention, for example, there may be provided a CD-changer-like feature within the seat, which causes the fuel cells to rotate and be exchanged between flights; a plastic cap with a spring may be provided to cause the fuel cell to easily eject; or any other type of cover/release mechanism may be used.

Changes and modifications, additions and deletions may be made to the structures and methods recited above and shown in the drawings without departing from the scope of the invention as defined in the following claims.

## Claims

1. A method for providing power to a passenger seat (10) comprising the following steps:
(a) providing a fuel cell system (12) having a fuel cell receiver (18) and a port (24, 32) positioned
- on an arm rest (14) of the passenger seat, or
- on or near the in-flight entertainment unit (36) of the passenger seat (10),
b) providing a fuel cell bottle (20);
c) inserting the fuel cell bottle (20) into the port (24, 32) by mean of a quick fixation feature including a receiving end (33) located at a base of the port (24, 32) into which a connection end (30) of the fuel cell bottle (20) is received, such that the fuel cell bottle (20) is fluidly connected with the fuel cell receiver (18); and
d) ejecting the fuel cell bottle (20) from the port (24, 32) by means of a quick release mechanism (34),
such that the fuel cell bottle (20) can be removed and replaced quickly without specific knowledge or tool required.

2. The method of claim 1, **characterized in that** it further comprises the step of depressing a release button (34) for ejecting the fuel cell bottle (20) from the port (32).

3. The method of claim 1, **characterized in that** it further comprises the step of providing a separate charging system that can refill the fuel cell bottle (20) with hydrogen using de-ionized or distilled water.

4. The method of claim 1, **characterized in that** the passenger seat (10) has various functions powered by the fuel cell (12).

5. The method of claim 1, **characterized in that** the passenger seat (10) is mounted on-board a passenger aircraft.

6. The method of claim 1, **characterized in that** it further comprises the step of providing a separate charging system that can refill the fuel cell bottle with hydrogen using de-ionized or distilled water.

## Patentansprüche

1. Verfahren zur Stromversorgung eines Passagiersitzes (10), umfassend die folgenden Schritte:
(a) Bereitstellen eines Brennstoffzellensystems (12) mit einer Brennstoffzellenaufnahme (18) und einer Öffnung (24, 32)
- an einer Armlehne (14) des Passagiersitzes, oder
- an oder in der Nähe der In-Flight-Entertainment-Einheit (36) des Passagiersitzes (10),
b) Bereitstellen einer Brennstoffzelle-Flasche (20);
c) Einsetzen der Brennstoffzelle-Flasche (20) in die Öffnung (24, 32) mittels einer Schnellbefestigungseinrichtung mit einem Aufnahmeende (33) an einer Basis der Öffnung (24, 32) in welche ein Verbindungsende (30) der Brennstoffzelle-Flasche (20) aufgenommen wird, so dass der Brennstoffzelle-Flasche (20) in Fluidverbindung mit dem Brennstoffzellenaufnahme (18) steht; und
d) Auswerfen der Brennstoffzelle-Flasche (20) aus der Öffnung (24, 32) mittels eines Schnellauslösemechanismus (34), so dass die Brennstoffzelle-Flasche (20) ohne spezifisches Kenntnis oder erforderliches Werkzeug schnell entfernt und ersetzt werden kann.

2. Verfahren nach Anspruch 1, **dadurch gekennzeichnet, dass** es ferner den Schritt umfasst, bei dem ein Auslöseknopf (34) zum Auswerfen der Brennstoffzellen-Flasche (20) aus der Öffnung (32) gedrückt wird.

3. Verfahren nach Anspruch 1, **dadurch gekennzeichnet, dass** es ferner den Schritt umfasst, bei dem ein separates Ladesystem bereitstellt wird, welches die Brennstoffzelle-Flasche (20) mit Wasserstoff unter Verwendung von entionisiertem oder destilliertem Wasser nachfüllen kann.

4. Verfahren nach Anspruch 1, **dadurch gekennzeichnet, dass** der Passagiersitz (10) verschiedene Funktionen aufweist, die von der Brennstoffzelle (12) mit Strom versorgt werden.

5. Verfahren nach Anspruch 1, **dadurch gekennzeichnet, dass** der Passagiersitz (10) an Bord eines Passagierflugzeugs angeordnet ist.

6. Verfahren nach Anspruch 1, **dadurch gekennzeichnet, dass** es ferner den Schritt umfasst, bei dem ein separates Ladesystem bereitstellt wird, welches die Brennstoffzelle-Flasche mit Wasserstoff unter Verwendung von entionisiertem oder destilliertem Wasser nachfüllen kann.

## Revendications

1. Procédé de production d'énergie pour un siège de passager (10), comprenant les étapes suivantes:
(a) fournir un système de pile à combustible (12) comportant un récepteur de pile à combustible (18) et un port (24, 32) positionné
- sur un accoudoir (14) du siège de passager, ou
- sur ou à proximité de l'unité de divertissement en vol (36) du siège passager (10),
b) fournir une recharge de pile à combustible (20) ;
c) insérer la recharge de pile à combustible (20) dans le port (24, 32) au moyen d'un dispositif de fixation rapide comprenant une extrémité de réception (33) située au niveau d'une base du port (24, 32) dans laquelle une extrémité de raccordement (30) de la recharge de pile à combustible (20) est reçue, de sorte que la recharge de pile à combustible (20) est en communication fluidique avec le récepteur de pile à combustible (18) ; et
d) éjecter la recharge de pile à combustible (20) du port (24, 32) au moyen d'un mécanisme de libération rapide (34), de sorte que la recharge de pile à combustible (20) peut être retirée et remplacée rapidement sans connaissance spécifique ou sans outil requis.

2. Procédé selon la revendication 1, **caractérisé en ce qu'**il comprend en outre l'étape consistant à appuyer sur un bouton de déverrouillage (34) pour éjecter la recharge de pile à combustible (20) du port (32).

3. Procédé selon la revendication 1, **caractérisé en ce qu'**il comprend en outre l'étape consistant à fournir un système de chargement séparé qui peut remplir la recharge de pile à combustible (20) avec de l'hydrogène en utilisant de l'eau dé-ionisée ou distillée.

4. Procédé selon la revendication 1, **caractérisé en ce que** le siège de passager (10) comprend différentes fonctions alimentées par la pile à combustible (12).

5. Procédé selon la revendication 1, **caractérisé en ce que** le siège de passager (10) est monté à bord d'un aéronef de passagers.

6. Procédé selon la revendication 1, **caractérisé en ce qu'**il comprend en outre l'étape consistant à fournir un système de chargement séparé qui peut remplir la recharge de pile à combustible avec de l'hydrogène en utilisant de l'eau dé-ionisée ou distillée.
